Europäisches Patentamt

European Patent Office

Office européen des brevets

(19)

(11) EP 0 709 652 B1

(12) **EUROPÄISCHE PATENTSCHRIFT**

(45) Veröffentlichungstag und Bekanntmachung des Hinweises auf die Patenterteilung:
**17.11.1999 Patentblatt 1999/46**

(51) Int Cl.⁶: **G01C 15/00**

(21) Anmeldenummer: **95116461.5**

(22) Anmeldetag: **19.10.1995**

(54) **Verfahren zur Bestimmung des Kippwinkels von codierten Nivellierlatten**

Method of determining the tilt angle of coded surveyor's staffs

Méthode pour déterminer l'angle d'inclinaison des mires de nivellement codées

(84) Benannte Vertragsstaaten:
**CH DE FR GB LI SE**

(30) Priorität: **29.10.1994 DE 4438759**

(43) Veröffentlichungstag der Anmeldung:
**01.05.1996 Patentblatt 1996/18**

(73) Patentinhaber: **Leica Geosystems AG**
**9435 Heerbrugg (CH)**

(72) Erfinder:
- **Braunecker, Bernhard**
  **CH-9445 Rebstein (CH)**
- **Gächter, Bernhard**
  **CH-9436 Balgach (CH)**

(74) Vertreter: **Stamer, Harald**
**Leica Microsystems International Holdings GmbH,**
**Konzernstelle Patente + Marken,**
**Ernst-Leitz-Strasse 17-37**
**35578 Wetzlar (DE)**

(56) Entgegenhaltungen:
**EP-A- 0 576 004        DE-A- 3 424 806**

- **MEASUREMENT TECHNIQUES, Bd. 37, Nr. 9, September 1994 NEW YORK US, Seiten 1025-1028, XP 000524479 V.V. BUSH ET AL. 'Device for side leveling compensating for nonperpendicularity between the leveling rod to the line of range'**
- **PATENT ABSTRACTS OF JAPAN vol. 018 no. 624 (P-1833) ,28.November 1994 & JP-A-06 241792 (TOPCON CORP) 2.September 1994,**
- **SOVIET INVENTIONS ILLUSTRATED Section EI, Week 7927 15.August 1979 Derwent Publications Ltd., London, GB; Class R11, AN F8546B & SU-A-623 108 (LENGD CIVIL ENG) , 20.Juli 1978**

**Beschreibung**

Die Erfindung betrifft ein Verfahren zur Bestimmung des Kippwinkels von codierten Nivellierlatten in Meßrichtung mittels eines elektronischen Nivelliergeräts mit einer Abbildungsoptik, einem ortsauflösenden optoelektronischen Detektor und einer Recheneinheit und mit Hilfe einer Nivelliermessung, aus der derjenige Ort auf der Nivellierlatte bestimmt wird, der dem im Gesichtsfeld der Abbildungsoptik befindlichen und vom Detektor gemessenen Codemuster zugeordnet werden kann, wodurch der von der Nivellierlatte her bekannte und ideale Codemusterverlauf in dem betrachteten Bereich festgestellt und gegeben ist.

Das Hauptanwendungsgebiet der Erfindung liegt im Bereich der automatisierten Nivellierung. Hier finden Nivelliergeräte in ihrer Kombination mit Nivellierlatten vielseitige Verwendungsmöglichkeiten. Beispielsweise dienen sie im geodätischen Vermessungswesen der Bestimmung von Höhenfixpunkten und der topografischen und kartografischen Vermessung oder sie werden in der Bauvermessung, im Verkehrswegebau oder im Tunnel - und Bergbau eingesetzt. Die hauptsächliche Bestimmungsgröße beim Nivelliermeßvorgang ist der Höhenunterschied zwischen dem Nivelliergerät und der anvisierten Nivellierlatte.

Beim klassischen Nivelliergerät wird dessen Fernrohr dazu benutzt, die Höhenskala einer entfernt aufgestellten Nivellierlatte abzulesen. Der abgelesene Zahlenwert befindet sich dabei genau auf der optischen Achse, also im Fadenkreuz des Fernrohrs. Es wird vorausgesetzt, daß die Nivellierlatte senkrecht zur optischen Achse des Fernrohrs ausgerichtet ist. Eine Verkippung der Nivellierlatte in Beobachtungsrichtung, also eine Verkippung zum Nivelliergerät hin oder von diesem weg, bewirkt, daß der auf der Nivellierlatte anvisierte Punkt nach unten wandert. Somit führt eine verkippte Nivellierlatte zu einem Fehler in der Höhenmessung. Um diesen Fehler gering zu halten, wird an den Nivellierlatten eine Libelle zur senkrechten Ausrichtung angebracht.

Mit dem Aufkommen von automatisierten Digital-Nivelliergeräten wurde erstmals eine elektronische Lattenablesung möglich. Zu diesem Zweck wird nach DE 34 24 806 C2 auf der Nivellierlatte ein Codemuster aus schwarzen und weißen Elementen aufgebracht, von dem mindestens ein Teil mit Hilfe der Fernrohroptik des Digital-Nivelliergerätes auf einer ortsauflösenden Detektorgruppe abgebildet wird. Hierbei wird nicht nur die Latteninformation auf der optischen Achse des Fernrohrs sondern die gesamte im Gesichtsfeld des Fernrohrs befindliche Information des Codemusters genutzt, um durch Vergleich mit einem Referenzcodemuster den gewünschten Höhenmeßwert zu erhalten. Zudem liefert der Positionsgeber der Fokussiereinrichtung des Digital-Nivelliergerätes näherungsweise die Entfernung zur Nivellierlatte. Die genaue Entfernung wird durch die Auswerteprozedur des aufgenommenen Codemusters bestimmt.

Der Nivelliervorgang läuft dann folgendermaßen ab. Das Nivelliergerät wird zunächst horizontiert, d.h. die optische Achse des Fernrohrs wird in eine horizontale Ebene gebracht. Die Nivellierlatte wird mit dem Fernrohr anvisiert und mit der Fokuseinrichtung scharf gestellt. Der Positionsgeber der Fokuseinrichtung liefert den Abstand zur Nivellierlatte, aus dem sich zusammen mit der Brennweite des Fernrohrobjektivs der Abbildungsmaßstab errechnet. Mit diesem Abbildungsmaßstab wird der im Gesichtsfeld des Fernrohrs liegende Ausschnitt des Codemusters der Nivellierlatte auf dem Detektor abgebildet. Der Abbildungsmaßstab wird in das Codemuster eingerechnet, um den Vergleich mit dem Referenzcodemuster durchführen zu können. Das Referenzcodemuster befindet sich in einem elektronischen Speicher und gibt das Originalcodemuster der Nivellierlatte wieder. Als Vergleichsverfahren wird eine Kreuzkorrelation durchgeführt, die eine bestmögliche Übereinstimmung des gemessenen Codemusterausschnitts mit einem entsprechenden Ausschnitt auf dem Referenzcodemuster ermittelt. Mit der gefundenen Übereinstimmung ist die Lage des Ausschnitts innerhalb des Referenzcodemusters und somit der Ort auf der Nivellierlatte bekannt. Dadurch ist die Höhe der Nivellierlatte bezüglich des Nivelliergeräts bestimmt.

Mit diesem Digital-Nivelliergerät konnte selbst bei teilweise verdecktem Lattencode, insbesondere auch bei Abdeckungen in der optischen Achse, und bei großen Störsignalanteilen eine genauere und schnellere Bestimmung der Nivellierhöhe und der Entfernung erreicht werden, als es mit den bis dahin bekannten Verfahren möglich war. Zudem liefert das automatisierte Digital-Nivelliersystem die Meßwerte zuverlässig, denn es schließt menschliche Fehlerquellen beim Ablesen und Auswerten der Zahlenwerte bei früheren Nivellierlatten aus.

In der EP 0 576 004 A1 wird ebenfalls ein elektronisches Nivelliergerät und eine zugehörige Nivellierlatte beschrieben. Eine Fernrohroptik erzeugt von dem schwarz-weißen Strichmuster der Nivellierlatte ein Bild auf einem photoelektrischen Empfänger. Die elektrischen Signale werden in einem Signalprozessor direkt oder über eine Fouriertransformation ausgewertet. Dabei werden die Perioden und die Phasen der auf der Nivellierlatte aufgebrachten Muster bestimmt, um daraus die Entfernung zwischen Nivelliergerät und Nivellierlatte und die Nivellierhöhe zu ermitteln.

Das auf der Nivellierlatte aufgebrachte Muster ist in Blockgruppen zu je 3 Blöcken eingeteilt (bei einem der Ausführungsbeispiele nur zu je 2 Blöcken). Die einzelnen Blöcke A,B und R bilden über die gesamte Nivellierlatte jeweils ein periodisches Muster mit unterschiedlicher Ortsfrequenz. Der Abstand zwischen den Schwerpunkten benachbarter Blöcke ist konstant und weist die kürzeste aller vorkommenden Perioden auf Dieser Blockabstand wird als Referenz betrachtet und korrespondiert mit der höchsten Frequenz aus der Fouriertransformation. Die Frequenz des Referenzsignals verringert sich - wie auch die Frequenzen der anderen Muster - mit abnehmender Entfernung zwischen Nivelliergerät und Nivellierlatte. Aus der gemessenen Frequenz des Referenzsignals und aus dem dazu korrespondiernden bekannten Blockabstand auf der Nivellierlatte und mit der Objektivbrennweite wird die Entfernung zur Nivellierlatte berechnet.

Je nach Größe der berechneten Entfernung werden dann für die Höhenbestimmung unterschiedliche Methoden verwendet. Für große Entfernungen wird die Fouriertransformation genutzt. Da die Muster periodisch und in untereinander vorbestimmter Weise auf der Nivellierlatte angeordnet sind, kann jedes gemessene und fouriertransformierte Signal identifiziert und den einzelnen Blockmustern zugeordnet werden. Aus der Phasenlage der Differenzsignale A-R und B-R wird als Grobmessung die Position der Blockgruppe auf der Nivellierlatte ermittelt. Innerhalb der Blockgruppe wird als Feinmessung aus der Phasenlage der Signale aus den Blockabständen die genaue Höhenposition bestimmt. Für kurze Entfernungen zur Nivellierlatte werden aus Genauigkeitsgründen die direkt gemessenen Signale genutzt und aus deren Phasenlage die Nivellierhöhe bestimmt.

Bei einem Ausführungsbeispiel wird eine motorisierte Fokussierlinse verwendet, um eine automatisierte Fokussierung zu ermöglichen. Sobald die Fokussierlinse aus der Fokusposition herausfährt, verringert sich der Peak der Fouriertransformierten der Funktion der konstanten Blockabstände, wodurch die Fokussierlinse geregelt werden kann.

Zusammenfassend betrachtet ordnen die Meß- und Auswerteverfahren des Digital-Nivelliersystems nach DE 34 24 806 C2 und nach EP 0 576 004 A1 dem gemessenen Codemuster den bestmöglich korrespondierenden Abschnitt auf der Nivellierlatte zu. Jedoch berücksichtigen sie dabei nicht den Effekt, der aufgrund einer Verkippung der Nivellierlatte entsteht und der einen Beitrag zur Meßungenauigkeit liefert. Die Verkippung der Nivellierlatte soll durch einen Kippwinkel definiert sein, der als Differenzwinkel zwischen der Nivellierlatte und der Detektorebene auftritt. Im Idealfall liegen Nivellierlatte und Detektorebene exakt parallel zueinander und der Kippwinkel ist null. In diesem Fall steht die Nivellierlatte senkrecht zur optischen Achse der Abbildungsoptik, wenn die Detektorebene wie üblich senkrecht zur optischen Achse justiert ist. Ist zudem das Nivelliergerät horizontiert, d.h. befindet sich die optische Achse in einer horizontalen Ebene, so steht die Nivellierlatte auch senkrecht zur Erdoberfläche. Unter diesen Umständen ist der Kippwinkel identisch mit der Abweichung der Nivellierlatte aus ihrer senkrechten Position in Meß- bzw. Beobachtungsrichtung.

Durch eine solchermaßen in Beobachtungsrichtung verkippte Nivellierlatte entsteht ein Fehler in der Höhen- und Distanzmessung, denn der Schnittpunkt der optischen Achse mit der Nivellierlatte liegt an einer anderen Stelle auf der Nivellierlatte als bei deren senkrechter Ausrichtung. Zwar soll die Nivellierlatte vom Bedienpersonal möglichst senkrecht gehalten werden, was auch mit Hilfe einer an der Nivellierlatte angebrachten Libelle visuell überwacht werden kann. Jedoch ist die Libellenablesung in ihrer Genauigkeit begrenzt, sie ist umständlich und bereits eine geringe Unachtsamkeit des Bedienpersonals führt zu deutlich fehlerbehafteten Meßergebnissen. Nachträglich gibt es keine Möglichkeit, einen solchen Fehler zu korrigieren. Gegebenenfalls muß das gesamte Nivellement wiederholt werden. Dasselbe Problem ergibt sich auch für den Fall, daß nur eine einzige Person die Nivelliermessung durchführt und die alleinstehende Nivellierlatte dem Wind und Luftströmungen ausgesetzt ist und dadurch ein Kippwinkel zum Meßzeitpunkt vorhanden ist.

JP-A-06 241 792 beschreibt eine codierte Nivellierlatte zur Verwendung zusammen mit einem elektromischen Nivelliergerät. Die Nivellierlatte enthält einen Neigungssensor, dessen Meßsignale über die Meßzeit gespeichert werden, so daß die mit dem Nivelliergerät gemessenen Werte nachträglich anhand der gespeicherten Neigungssignale korrigiert werden können.

Deshalb liegt der Erfindung die Aufgabe zugrunde, ein Verfahren anzugeben, mit dem eine in Meßrichtung (Beobachtungsrichtung) bestehende Verkippung einer codierten Nivellierlatte festgestellt und ihr Kippwinkel, der als Winkel zwischen der Nivellierlatte und der Ebene eines den Code der Nivellierlatte aufnehmenden ortsempfindlichen Detektors definiert ist, bestimmt werden kann.

Diese Aufgabe wird erfindungsgemäß dadurch gelöst, daß durch Differenzbildung des ermittelten, idealen Codemusterverlaufs mit dem aktuell gemessenen Codemusterverlauf die Verzeichnung $Vz$ der im Gesichtsfeld liegenden einzelnen Codeelemente und daraus eine Verzeichnungsfunktion $Vz(l_{CE})$ aller Codeelemente bestimmt und in der Recheneinheit verarbeitet wird und daß aus der Verzeichnungsfunktion $Vz(l_{CE})$ des Codemusters mit Hilfe geometrisch-optischer Beziehungen, die sich aus der Abbildungsoptik (5), der Höhe ($h_0$) ihrer optischen Achse, der Entfernung ($s_0$) zur Latte, dem Ort des Lattendrehpunktes (3) bezüglich des Fußpunktes (2) des Codemusters und dem Ort ($l_{CE}$) der Codeelemente innerhalb des Gesichtsfeldes der Abbildungsoptik (5) ergeben, der Kippwinkel ($\alpha$) der Nivellierlatte (1) ermittelt wird.

Vorteilhafte Weiterbildungen der Erfindung sind durch die Merkmale der abhängigen Ansprüche gekennzeichnet.

Zur Darstellung der Erfindung wird ein elektronisches Nivelliersystem verwendet mit einer codierten Nivellierlatte, einem Fernrohr als Abbildungsoptik, einem ortsauflösenden optoelektronischen Detektor und einem Rechner. Ein Teil des Codemusters der Latte wird von der Abbildungsoptik auf dem Detektor abgebildet. Dieser nimmt das Codemusterbild ortsaufgelöst auf und der nachgeschaltete Rechner wertet das Bild aus. Als Detektor können z.B.

lineare Diodenarrays mit eindimensional angeordneten Photodioden, Vidiconröhren oder CCD-Arrays mit einer zweidimensionalen Anordnung von lichtempfindlichen Pixeln eingesetzt werden.

Im folgenden wird an den Nivelliervorgang angeknüpft, der in der Einleitung aus den dort genannten Schriften beschrieben ist. Aus dem vom Fernrohr abgebildeten Codemusterausschnitt, der im Gesichtsfeld des Fernrohrs liegt, wird durch den Nivelliervorgang der Ort auf der Nivellierlatte bestimmt, der diesem gemessenen Codemusterausschnitt zugeordnet werden kann. Bei genauerem Hinsehen allerdings stimmt das gemessene Codemusterbild nicht exakt mit dem auf der Nivellierlatte befindlichen und bekannten Codemuster in dem beobachteten Lattenausschnitt überein. Das gemessene Codemuster ist mit Fehlern behaftet. Erfindungsgemäß ist erkannt worden, daß die festgestellten Abweichungen überwiegend aus einer Lattenverkippung resultieren.

Aus dem Verlauf des gemessenen Codemusters und dem daraus zugeordneten Codemusterausschnitt auf der Nivellierlatte mit bekanntem idealen Verlauf kann durch Differenzbildung die Abweichung des gemessenen Codemusters vom idealen Codemuster als Funktion des Ortes bestimmt werden. Diese Abweichung wird Verzeichnung oder Verzeichnungsfunktion genannt. Die so aus der Messung ermittelte Verzeichnungsfunktion kann quantitativ ausgewertet werden, wenn alle sie beeinflussenden Größen bekannt sind und die Zusammenhänge quantitativ beschrieben werden können.

Die Abbildungsfehler der Optik sind vernachlässigbar klein, so daß eine maßstabsgerechte Abbildung erfolgen kann. Das Codemuster wird aber nur dann maßstabsgerecht, d.h. mit konstantem Maßstab auf dem Detektor abgebildet, wenn die Codemusterebene und die optische Achse der abbildenden Optik einen rechten Winkel zueinander bilden. Es wird vorausgesetzt, daß die Detektorfläche ebenfalls senkrecht zur optischen Achse ausgerichtet ist. Schließt jedoch die Codemusterebene mit der optischen Achse einen von 90° verschiedenen Winkel ein, wodurch ein Kippwinkel gegenüber der idealen 90°-Lage auftritt, so ergeben sich im Codemusterbild Abweichungen. Die Codeelemente sind versetzt und das Codemuster erscheint gestreckt, wenn die Verkippung der Latte zur abbildenden Optik hin erfolgt. Erfolgt die Verkippung der Latte von der abbildenden Optik weg, so erscheint das Codemuster gestaucht. Das Ausmaß der Streckung oder Stauchung des Codemusters vergrößert sich mit zunehmendem Betrag des Kippwinkels. Es hängt aber auch von der Lage der Codeelemente auf der Nivellierlatte ab und wird bei gegebenem Kippwinkel um so größer, je weiter die Codeelemente vom Fußpunkt des Codemusters entfernt sind. Der Fußpunkt des Codemusters ist die Nullpunktskoordinate des Codemusters und definiert somit dessen Beginn. Das Codemuster wird also je nach Kippwinkel der Nivellierlatte und je nach Lage der Codeelemente bezüglich des Codemusterfußpunkts mit unterschiedlichen Maßstabsverhältnissen abgebildet. Deswegen wird die sich daraus ergebende Abweichung des Codemusterbildes gegenüber einem Codemusterbild bei der idealen 90°-Lage als die bereits erwähnte Verzeichnung bezeichnet.

In die Verzeichnung gehen neben dem Kippwinkel und der Lage der Codeelemente auf der Nivellierlatte noch weitere Parameter ein. Diese sind der Abstand zwischen dem Nivelliergerät und der Nivellierlatte und bestimmte Systemparameter der Abbildungsoptik, die im Ausführungsbeispiel näher beschrieben werden. Insbesondere ist die Verzeichnung auch von dem Ort des Drehpunkts der Nivellierlatte abhängig, wie sich bei der Durchführung verschiedener Meßreihen herausgestellt hat. Bis dahin ist der Einfluß des Ortes des Lattendrehpunkts nicht beachtet worden. Ist der Lattendrehpunkt nicht identisch mit dem Fußpunkt des Codemusters, so macht sich dies in einer veränderten Verzeichnung bemerkbar. Der Abstand zwischen Lattendrehpunkt und Codemusterfußpunkt wird als Pivotstrecke bezeichnet. Die Verzeichnung hängt also auch von der Größe der Pivotstrekke ab.

Im übrigen ist der Fehler, der durch eine laterale Lattenverkippung, also eine Kippung der Latte in einer Ebene parallel zur Detektorebene, hervorgerufen wird, in der Praxis vernachlässigbar klein. Deswegen braucht er für die weiteren Ausführungen nicht beachtet zu werden.

Zur Bestimmung des Kippwinkels wird die gemessene Verzeichnung unter Anwendung der funktionalen Zusammenhänge mit den genannten Parametern quantitativ ausgewertet. Der Kippwinkel ist ein Maß für die Abweichung der Nivellierlatte aus ihrer senkrechten Lage, vorausgesetzt, daß das Nivelliergerät horizontiert ist oder andernfalls die Abweichung der optischen Achse des Nivelliergeräts aus einer horizontalen Ebene bekannt ist.

Die Kenntnis des Kippwinkels einer Lattenverkippung ist für verschiedene Anwendungszwecke nützlich. So kann z.B. die Abweichung eines Gegenstands aus seiner sonst vertikalen Lage bestimmt werden. Hierzu kann eine codierte Latte mit dem Gegenstand verbunden oder eine Codierung direkt auf den Gegenstand angebracht werden. Damit kann der Neigungswinkel eines entfernten Gegenstandes gemessen und überwacht werden.

Bei Nivelliermessungen mit einem Digital-Nivelliergerät und einer codierten Nivellierlatte soll zunächst der erfindungsgemäß bestimmte Kippwinkel der Nivellierlatte an sich zur Kenntnis angezeigt werden. In einem nächsten Schritt wird aus der Kenntnis des Kippwinkels der von ihm erzeugte Fehler in der Distanz- und Höhenmessung errechnet und für die Korrektur der Nivelliermessung verwendet. Dies geschieht durch Anwendung der Gesetze der Trigonometrie. Bei bekannter Lage des Schnittpunkts der optischen Achse mit der verkippten Nivellierlatte bezüglich des Fußpunktes des Codemusters ergibt sich mit dem Kosinus des ermittelten Kippwinkels die Höhe der ideal senkrecht stehenden Nivellierlatte und mit dem Sinus des Kippwinkels die Korrektur zu deren Distanz zum Nivelliergerät. Besteht eine Pivotstrecke zwischen dem Fußpunkt des Codemusters und dem Drehpunkt der Nivellierlatte, so wird in analoger Weise mit Hilfe der trigonometrischen Funktionen die Auswirkung der Pivotstrecke in die Höhen- und Distanzmessung eingerechnet.

Die Möglichkeit, den aus einer Lattenverkippung resultierenden Kippwinkel zu bestimmen und daraus den Fehler in der Höhen- und Distanzmessung zu korrigieren, hat für die Nivelliermessungen und deren Ablauf folgende vorteilhafte Auswirkungen.

Die bisherige Anforderung einer exakten Senkrechtstellung der Nivellierlatte vor jeder Messung entfällt. Diese Unabhängigkeit des Meßvorgangs von der genau senkrechten Ausrichtung der Nivellierlatte hat zwei wesentliche Vorteile. Eine versehentliche Verkippung oder eine nicht korrekte Ausrichtung der Nivellierlatte nach der Libellenanzeige wird vom Digital-Nivelliersystem automatisch erkannt und rechnerisch ausgeglichen. Gelegentliche Ungenauigkeiten oder Unachtsamkeiten des Bedienpersonals oder der Windeinfluß auf eine alleinstehende Nivellierlatte wirken sich nicht mehr aus. Dadurch wird die Zuverlässigkeit der Meßergebnisse wesentlich erhöht und es erledigt sich eine Wiederholung von Nivellier-Meßabläufen. Dies erspart Zeit und Kosten.

Zum anderen ergibt sich eine Zeitersparnis auch beim Justieren der Nivellierlatte. Da diese erfindungsgemäß nur ungefähr nach der Libellenanzeige ausgerichtet zu werden braucht, entfällt die bisherige sorgfältige und genaue Libellenausrichtung. Dies verkürzt den einzelnen Meßablauf und macht sich bei vielen Messungen zeitlich entsprechend bemerkbar.

Schließlich bedeutet die Ermittlung des Kippwinkels der Nivellierlatte und die sich daraus ergebende Korrektur der Höhen- und Entfernungsmessung eine verbesserte Genauigkeit der Nivellierung. Die Steigerung der Meßgenauigkeit einer einzelnen Höhen- und Entfernungsmessung hängt von der Entfernung zwischen Nivellierlatte und Nivelliergerät ab. Da bei einer geodätischen Vermessung aufeinander aufbauende Messungen durchgeführt werden und sich das Gesamtergebnis aus den Einzelmessungen zusammensetzt, ergibt sich im Endresultat eine beträchtliche Genauigkeitssteigerung.

Im folgenden wird ein Ausführungsbeispiel der Erfindung anhand der Zeichnung näher erläutert. Es zeigt

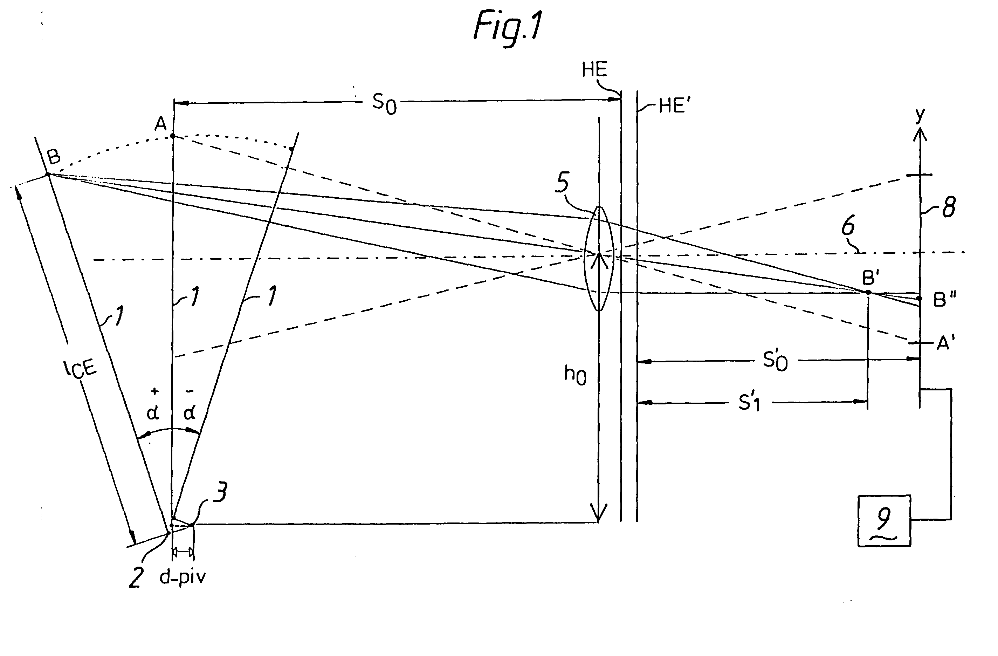

Fig. 1  eine schematische Darstellung der Meßanordnung und der Verzeichnung bei Verkippung der Nivellierlatte.

Zur Darstellung der quantitativen Zusammenhänge wird von einem horizontierten, optischen Abbildungssystem 5 ausgegangen. Die anvisierte codierte Latte 1 ist um den Winkel $\alpha$ aus ihrer senkrechten Position heraus gemäß Fig.1 verkippt. Eine Kippung der Latte 1 von der Abbildungsoptik 5 weg ergibt einen positiven Kippwinkel $\alpha$, eine Lattenkippung zur Abbildungsoptik 5 hin führt zu einem negativen Kippwinkel $\alpha$. Zudem ist der Fußpunkt 2 des Codemusters vom mechanischen Drehpunkt 3 der Latte 1 um eine Pivotstrecke d_piv versetzt. Im Einzelfall kann die Pivotstrecke d_piv auch null sein, also der Fußpunkt 2 des Codemusters und der Lattendrehpunkt 3 zusammenfallen.

Wird zuerst ein im Gesichtsfeld der Abbildungsoptik 5 befindliches Codeelement auf der unverkippten Latte 1 in Stellung A betrachtet, so liegt sein paraxialer Bildpunkt A' im fokussierten Zustand auf dem als ortsauflösenden Detektor dienenden CCD-Array 8. Als nächstes soll bei unveränderter Fokuseinstellung die Latte 1 um einen Kippwinkel $\alpha$ verkippt sein. Da es sich um einen kleinen Kippwinkel $\alpha$ handelt, liegt die verkippte Latte 1 noch im Bereich der Schärfentiefe der Abbildungsoptik 5. Damit wandert dasselbe Codeelement aus Stellung A in Stellung B und sein konjugierter Bildpunkt bester Schärfe B' liegt außerhalb des CCD-Arrays 8. Damit kommt es bei verkippter Latte 1 zu einem Schwerpunktversatz, also einem Lageversatz B'' des Lichtbündels auf dem CCD-Array 8, der zudem noch von der Lage der Austrittspupille bestimmt wird. Dieser Versatz wird Verzeichnung Vz genannt und variiert je nach Lage des Codeelements im Gesichtsfeld, aber auch je nach Kippwinkel $\alpha$ und Pivotstrecke d_piv der Latte 1.

Ausgehend von den vorliegenden geometrisch-optischen Beziehungen ergibt sich für die Verzeichnung Vz eines Codeelements folgende funktionale Abhängigkeit vom Kippwinkel $\alpha$, der Pivotstrecke d_piv und der Codeelementlage $l_{CE}$ auf der Latte 1.

$$Vz = y(A') - y(B'') \tag{1}$$

Dabei ist y(A') die Lage des Schwerpunkts des Codeelementbilds auf dem CCD-Array 8 bei unverkippter Latte 1 mit

$$y(A') = \beta_0 \cdot (l_{CE} - h_0), \tag{2}$$

wobei $\beta_0$ die paraxiale Vergrößerung bei unverkippter Latte 1 und $h_0$ die Höhendifferenz zwischen der optischen Achse 6 der Abbildungsoptik und dem Lattendrehpunkt 3 (Pivotpunkt, Fig. 1) ist. Dabei befindet sich y(A') im Abstand $s'_0$ von der Hauptebene HE' entfernt. Bei verkippter Latte 1 liegt das Codeelementbild bei y(B') im Abstand $s'_1$ von der Haupt-

ebene HE' entfernt und der Schwerpunkt der Lichtintensität auf dem CCD-Array 8 liegt bei y(B'') gemäß

$$y(B'') = y(B') \cdot \frac{(s'_0 - s'_{AP})}{(s'_1 - s'_{AP})} = y(B') \cdot (1 - \frac{\Delta'}{(s'_0 - s'_{AP})}), \tag{3}$$

wobei $s'_{AP}$ die Lage der Austrittspupille darstellt und für die Differenz der paraxialen Bildorte

$$\Delta' = s'_0 - s'_1 = \beta_0^2 \cdot \Delta \tag{4}$$

gilt mit

$$\Delta = -l_{CE} \cdot \sin \alpha + d\_piv \cdot (\cos \alpha - 1). \tag{5}$$

Weiter gilt

$$y(B') = \beta_1 \cdot (l_{CE} \cdot \cos \alpha + d\_piv \cdot \sin \alpha - h_0) \tag{6}$$

mit der paraxialen Vergrößerung im verkippten Fall

$$\beta_1 = \beta_0 \cdot (1 + \Delta/s_0 \cdot (\beta_0 - 1), \tag{7}$$

wobei $s_0$ der Abstand zwischen der Hauptebene HE und der unverkippten Latte 1 ist. Werden diese Gleichungen zusammengeführt, ergeben sich nichtlineare Abhängigkeiten der Verzeichnung Vz von $\alpha$, $l_{CE}$, d_piv und $\beta_0$.

Mit Ausnahme des Kippwinkels $\alpha$ sind alle in den Gleichungen vorkommenden Größen bekannt oder bestimmbar. Hierbei sind $\beta_0$, $s'_0$, $s'_{AP}$ die geometrisch-optischen Größen der Abbildungsoptik 5 wie oben beschrieben, die mit der Nivellierlatte 1 verbundenen Größen sind $l_{CE}$, d_piv, $\alpha$ und $h_0$ die Nivellierhöhe und $s_0$ die Entfernung zwischen Nivellierlatte und der Abbildungsoptik 5.

Die vom CCD-Array 8 aufgenommenen Signale werden an die Recheneinheit 9 weitergegeben und von ihr ausgewertet. Die Verzeichnung Vz wird aus der Differenz zwischen dem ermittelten idealen und dem aktuell gemessenen Codemuster für die einzelnen im Gesichtsfeld der Abbildungsoptik liegenden Codeelemente gebildet. Daraus ergibt sich die Verzeichnung Vz in Abhängigkeit der Lage $l_{CE}$ der Codeelemente als eine Folge von Wertepaaren. Diese können bei graphischer Auftragung direkt untereinander oder über Approximationsfunktionen verbunden werden. Zu der so gebildeten Verzeichnungsfunktion Vz ($l_{CE}$) tragen alle im Gesichtsfeld der Abbildungsoptik 5 befindlichen Codeelemente bei. Aus der Verzeichnungsfunktion Vz ($l_{CE}$) wird der Kippwinkel a einschließlich seines Vorzeichens ermittelt.

Bei Nivellieranwendungen wird neben der reinen Kenntnis des Kippwinkels a auch der Fehler der Höhenübertragung und der Fehler der Distanz zwischen der Abbildungsoptik 5 des Nivelliergeräts und Nivellierlatte 1 bei verkippter Nivellierlatte 1 bestimmt. Diese Fehler errechnen sich aus dem Kippwinkel a nach den Gesetzen der Trigonometrie, wie bereits beschrieben wurde. Damit ist Korrektur der Höhenübertragung und der Distanzmessung bekannt.

Falls eine der in den obigen Gleichungen vorkommenden Größen wie z.B. d_piv nicht oder nicht exakt bekannt ist, kann diese bei Anwendung geeigneter an sich bekannter Fit-Algorithmen zusätzlich zum Kippwinkel $\alpha$ aus der Verzeichnungsfunktion Vz ($l_{CE}$) ermittelt werden. Dies kann auch für mehrere Parameter gleichzeitig durchgeführt werden, auf die die Verzeichnungsfunktion entsprechend empfindlich reagiert. Die Analyse der Verzeichnungsfunktion läßt sich so auf die Bestimmung mehrerer Größen erweitern.

**Patentansprüche**

1. Verfahren zur Bestimmung des Kippwinkels ($\alpha$) von codierten Nivellierlatten (1) in Meßrichtung mittels eines elektronischen Nivelliergeräts mit einer Abbildungsoptik (5), einem ortsauflösenden optoelektronischen Detektor (8) und einer Recheneinheit (9) und mit Hilfe einer Nivelliermessung, aus der derjenige Ort auf der Nivellierlatte (1) bestimmt wird, der dem im Gesichtsfeld der Abbildungsoptik (5) befindlichen und vom Detektor (8) gemessenen Codemuster zugeordnet werden kann, wodurch der von der Nivellierlatte (1) her bekannte und ideale Codemusterverlauf in dem betrachteten Bereich festgestellt und gegeben ist, **dadurch gekennzeichnet**, daß durch Differenzbildung des ermittelten, idealen Codemusterverlaufs mit dem aktuell gemessenen Codemusterverlauf die Verzeichnung Vz der im Gesichtsfeld liegenden einzelnen Codeelemente und daraus eine Verzeichnungsfunktion Vz ($1_{CE}$) aller Codeelemente bestimmt und in der Recheneinheit (9) verarbeitet wird und daß aus der Verzeichnungsfunktion Vz($1_{CE}$) des Codemusters mit Hilfe geometrisch-optischer Beziehungen, die sich aus der Abbildungsoptik (5), der Höhe ($h_0$) ihrer optischen Achse, der Entfernung ($s_0$) zur Latte (1), dem Ort des Lattendrehpunktes (3) bezüglich des Fußpunktes (2) des Codemusters und dem Ort ($1_{CE}$) der Codeelemente innerhalb des Gesichtsfeldes der Abbildungsoptik (5) ergeben, der Kippwinkel ($\alpha$) der Nivellierlatte (1) ermittelt wird.

2.  Verfahren nach Anspruch 1, **dadurch gekennzeichnet**, daß aus dem Kippwinkel ($\alpha$) der Nivellierlatte (1) gemäß trigonometrischer Gesetze eine Korrektur der Höhe ($h_0$) des von der Abbildungsoptik (5) aufgenommen Codemusters auf der Nivellierlatte (1) ermittelt wird.

3.  Verfahren nach Anspruch 1 oder 2, **dadurch gekennzeichnet,** daß aus dem Kippwinkel ($\alpha$) der Nivellierlatte (1) gemäß trigonometrischer Gesetze eine Korrektur der Distanz ($s_0$) zwischen Abbildungsoptik (5) und codierter Latte (1) ermittelt wird.

## Claims

1.  Method of determining the tilt angle ($\alpha$) of coded surveyor's staffs (1) in the measuring direction by means of an electronic levelling device comprising an imaging optical system (5), a location-resolving optoelectronic detector (8) and a computing unit (9) and with the aid of a levelling measurement from which that location on the surveyor's staff (1) which can be coordinated with the code pattern present in the field of vision of the imaging optical system (5) and measured by the detector (8) is determined, with the result that the ideal code pattern variation known from the surveyor's staff (1) is established and given in the region considered, characterized in that the distortion Vz of the individual code elements lying in the field of view is determined by calculating the difference between the determined, ideal code pattern variation and the code pattern variation actually measured and a distortion function Vz($l_{CE}$) of all code elements is determined therefrom and is processed in the computing unit (9), and that the tilt angle ($\alpha$) of the surveyor's staff (1) is determined from the distortion function Vz($l_{CE}$) of the code pattern with the aid of geometrical-optical relationships which are derived from the imaging optical system (5), the height ($h_0$) of its optical axis, the distance ($s_0$) to the staff (1), the location of the pivot point (3) of the staff relative to the foot point (2) of the code pattern and the location ($l_{CE}$) of the code elements within the field of view of the imaging optical system (5).

2.  Method according to Claim 1, characterized in that a correction of the height ($h_0$) of that code pattern on the surveyor's staff (1) which is recorded by the imaging optical system (5) is determined from the tilt angle ($\alpha$) of the surveyor's staff (1) according to laws of trigonometry.

3.  Method according to Claim 1 or 2, characterized in that a correction of the distance ($s_0$) between imaging optical system (5) and coded staff (1) is determined from the tilt angle ($\alpha$) of the surveyor's staff (1) according to laws of trigonometry.

## Revendications

1.  Procédé pour déterminer l'angle d'inclinaison ($\alpha$) des mires de nivellement codées (1) dans la direction de mesure, au moyen d'un appareil de nivellement électrique, avec une optique de représentation (5), un détecteur optoélectronique (8) générant une résolution du site et une unité de calcul (9) et à l'aide d'une mesure de nivellement, à partir de laquelle le site spécifique est déterminé sur la mire de nivellement, à laquelle peut être associé le motif de codage, se trouvant dans le champ d'observation de l'optique de représentation (5) et mesuré par le détecteur (8), faisant que l'allure du motif de codage, connue par la mire de nivellement (1) et idéale, est déterminée dans la zone observée et est donnée, caractérisé en ce que, en formant la différence entre l'allure de motif de codage idéale, déterminée, et l'allure de motif de codage mesurée, réelle, la distorsion d'image Vz des éléments de codage individuels situés dans le champ de vision est déterminée et, à partir de cela, une fonction de distorsion d'image Vz($l_{CE}$) de tous les éléments de codage est déterminée et traitée dans l'unité de calcul (9), et en ce que, à partir de la fonction de distorsion d'image Vz($l_{CE}$) du motif de codage, à l'aide des relations optogéométriques résultant de l'optique de présentation (5), de la hauteur ($h_0$) de son axe optique, de l'éloignement ($S_0$) par rapport à la latte (1), du site du centre de rotation de mire (3) par rapport au point de pied (2) du motif de codage et du site ($l_{CE}$) des éléments de codage à l'intérieur du champ de vision de l'optique de représentation (5), l'angle d'inclinaison ($\alpha$) de la mire de nivellement (1) est déterminé.

2. Procédé selon la revendication 1, caractérisé en ce qu'à partir de l'angle d'inclinaison ($\alpha$) de la mire de nivellement (1), en suivant les lois trigonométriques, on détermine une correction de la hauteur ($h_0$) du motif de codage, enregistré par l'optique de représentation (5), situé sur la mire de nivellement (1).

3. Procédé selon la revendication 1 ou 2, caractérisé en ce qu'à partir de l'angle d'inclinaison ($\alpha$) de la mire de nivellement (1), en suivant les lois trigonométriques, on détermine une correction de la distance ($s_0$) entre l'optique de représentation (5) et la mire codée (1).

Fig.1

EP 0 709 652 B1